# EUROPEAN PATENT SPECIFICATION

(11) **EP 1 864 041 B1**
(45) Date of publication and mention of the grant of the patent: **08.04.2009**
(21) Application number: 06710837.3
(22) Date of filing: 06.02.2006
(51) Int. Cl.: F16K 7/10

(54) **VALVE FOR FLUIDS**
VENTIL FÜR FLUIDE
ROBINET POUR LIQUIDES

(30) Priority: 25.03.2005 IT PR20050011
(43) Date of publication of application: 12.12.2007
(73) Proprietor: Sidel S.p.A., 43100 Parma (IT)
(72) Inventor: DALCIELO, Massimiliano, I-43100 Parma (IT); ZACCHE', Vanni, I-46037 Roncoferraro (mantova) (IT)
(74) Representative: Gotra, Stefano
(86) International application number: PCT/IB2006/050383
(87) International publication number: WO 2006/100611

(56) References cited:
- EP-A- 0 336 645
- CH-A- 422 647
- US-A- 5 771 937
- US-A1- 2002 079 470

## Description

### TECHNICAL FIELD AND BACKGROUND ART.

The present invention relates to a valve for fluids, as known for instance from document EP-A-336 645.

As is well known, existing pressure regulating valves act by throttling the passage section of a conduit for transporting the fluid, in order to induce predetermined head losses in the fluid itself.

In particular, known mechanical regulating valves are constituted by a valve body, in whose interior is obtained a passage conduit for a fluid. Inside said conduit is slidably movable a shutter, which, assuming various positions along the conduit itself, induces variable chokes in the fluid passage section.

Generally, the dimensions of the shutter are variable along its direction of longitudinal development.

Specifically, the shutter is driven, on one side, by means of compressed air acting on a first membrane. In particular, regulating the pressure of the compressed air the degree of opening of the shutter and of the pressure of the load is defined.

At the opposite side, the shutter is connected to a planar membrane able to amplify a force that is proportional to the differential pressure existing between the atmosphere and the load pressure; in particular, at each accidental variation of the load pressure, a force tending to bring it back to the calibration value is generated.

The displacement of the shutter can be calibrated by compressing a pre-load spring connected to the shutter itself.

The pressure regulating valves described above find particular use in machines for labelling containers.

As is well known, in labelling machines in which the labels are formed starting from a reeled film, the actuation of the cut and formed label is achieved by means of aspirating rollers. In particular, said rollers have a lateral surface provided with a plurality of through holes communicating with intake conduits which generally end in a single manifold connected to a vacuum pump.

The pump draws a suction with variable intensity, according to the angular position assumed by the label on the roller.

Normally, two aspirating rollers are present: a first roller, called cutting roller, and a second roller, called transfer roller.

The cutting roller retains the just-formed label starting from the reel and transfers it to the transfer roller.

Said transfer roller, after taking the label to a so-called glue roller, transfers the label onto the container.

The glue roller lays the glue in spots or in a film, depending on whether the glue is "hot" or "cold".

The transfer roller is provided with angular sectors having different degrees of vacuum, in order to meet the opposite requirements of having gradually to "capture" the label from the cutting roller and having instead to keep it securely adhering to the transfer roller during contact with the glue roller.

In fact, in some angular sections of the roller the suction is interrupted to allow the label to be transferred onto the container.

The valves briefly described above have some important drawbacks.

First of all, the shutter inside the valve body can be subject to jams due to accumulation of dirt which is deposited inside the fluid passage conduit.

Secondly, known valves are difficult to clean due to the reduced tolerances existing between the shutter and the fluid passage conduit.

Disadvantageously, the valves described above are costly to produce.

An additional drawback of the valves produced in accordance with the prior art is that they are particularly subject to corrosion, especially when they are used in the sector of labelling machines. The aforementioned rollers, in addition to aspirating air, inevitably also aspirate glue vapours, which are corrosive agents.

As is well known, valves for regulating the flow rate of a fluid are also available.

In particular, known flow rate regulating valves are provided with a conduit, in whose interior is present a movable ball, able to obstruct in variable fashion a passage port for a fluid.

Other known flow rate regulating valves are provided with a so-called butterfly shutter, usually hinged to inner walls of a conduit and movable by rotation, in such a way as to throttle the flow of fluid inside the conduit, thereby regulating the flow rate.

Both flow rate regulating valves are inserted in a circuit in which the pressure upstream and downstream of the valve is substantially constant.

An important drawback of the flow rate regulating valves described above is the difficulty to clean them due to the reduced tolerances existing between the shutter and the fluid passage conduit.

### DISCLOSURE OF INVENTION.

An object of the present invention is to obtain a valve for regulating the pressure or the flow rate of a fluid which has no mechanical parts in relative motion by rotation or translation.

An additional object of the present invention is to obtain a valve that has no rotating or dynamic seals for isolation from the exterior environment.

An additional object of the present invention is to obtain a valve that is substantially insensitive to the accumulation of dirt.

An additional object of the present invention is to make available a valve that has high resistance to chemical attacks, in particular to corrosion.

Yet a further object of the present invention is to propose a valve that can be used both with liquid and gaseous fluids.

An additional object of the present invention is to obtain the results expressed above within the context of a simple, economical constructive solution.

Said objects are fully achieved by the valve for fluids of the present invention, which is characterised by the content of the claims set out below:

### BRIEF DESCRIPTION OF DRAWINGS.

This and other objects shall become more readily apparent in the description that follows of a preferred embodiment, illustrated purely by way of non limiting example in the accompanying drawing tables, in which:

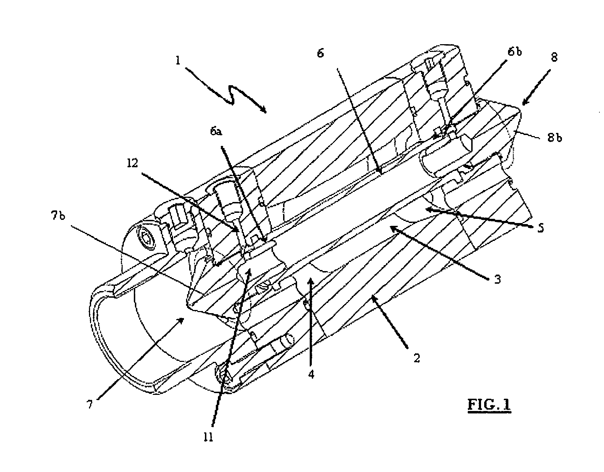

- Figure 1 shows a sectioned axonometric view of a valve for fluids in accordance with the present invention;
- Figure 2 shows a lateral section view of the valve shown in Figure 1;
- Figure 3 shows a cross section view of the valve shown in Figure 1.

### BEST MODE FOR CARRYING OUT THE INVENTION.

With reference to the figures, a valve for fluids in accordance with the present invention is globally designated by the number 1.

The valve 1 is constituted by a tubular body 2 which defines within it a passage conduit 3 provided with an inlet 4 and with an outlet 5 for a fluid.

The valve 1 comprises a hollow elastic element, preferably a tubular sleeve 6 having a substantially circular cross section, internally bearing on the passage conduit 3 of the tubular body 2.

Said tubular sleeve 6 has an end opening 6a to allow the entry of a driving fluid able to determine a given pressure, so-called driving pressure, inside the sleeve itself. In this way, the volume of the tubular sleeve 6 varies between a minimum value corresponding, respectively, to an operative condition of minimum obstruction of a section for the passage of a fluid inside the conduit 3 and an operative condition of maximum obstruction of said passage section.

In the illustrated example, a second end opening 6b is present to allow the entry of the driving fluid from the opposite part of the valve 1 relative to the first opening 6a. In conditions of operation, only one of said openings is operative, depending on the structure of the system in which the valve is installed.

In the illustrated example, the tubular sleeve 6 is positioned coaxially to the conduit 3 for the passage of a fluid.

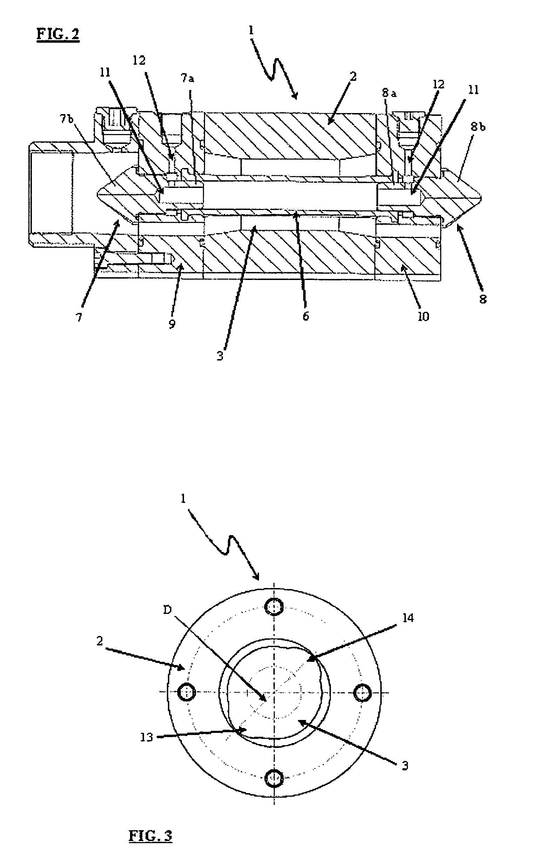

With particular reference to Figure 2, the tubular sleeve 6 is kept in position inside the passage conduit 3 by means of a pair of supports 7, 8, each of which has a first portion 7a, 8a able to be inserted in a corresponding end opening of the sleeve and a second portion 7b, 8b able to be connected to the tubular body 2.

In the preferred embodiment, the valve 1 comprises a pair of lateral flanges 9, 10 positioned at opposite ends of the tubular body 2. In this case, the supports 7, 8 are indirectly connected to the tubular body 2 by connection, preferably by means of screws (not shown), to said flanges 9, 10.

In the illustrated example, the second portion 7b, 8b of each support 7, 8 is outside the tubular sleeve 6 and it has a substantially ogival shape, in order not to hinder or excessively to disrupt the flow of fluid entering the passage conduit 3.

The first portion 7a, 8a of each support obstructs, providing a seal, the corresponding end opening of the tubular sleeve 6. In particular, in the preferred embodiment illustrated herein the driving fluid is introduced into the tubular body 6 by means of a channel 11 obtained on the first portion 7a, 8a of each support 7, 8.

It is stressed again that, in operating conditions, only the channel 11 of one of said first portions 7a, 8a is operative.

The lateral flanges 10, 9 are provided with corresponding channels 12 able to allow the driving fluid to enter the channel 11 obtained on said first portions of the supports and hence inside the tubular sleeve 6.

The driving fluid is preferably delivered into the sleeve by means of a pump and an automatic pressure regulator, both known and therefore not illustrated herein.

With particular reference to Figure 3, the passage conduit 3 has a circular cross section having a pair of lobes 13, 14 arranged in mutually opposite position along a diameter D of said cross section. In particular, in a possible alternative embodiment, the lobes 13, 14 can be joined to the circular portion of the cross section, so that said cross section has not corners or otherwise sharp perimeter variations. In this way, the wear of the tubular sleeve is reduced, thus assuring its longer duration.

In accordance with a second embodiment (not illustrated), the passage conduit 3 has a substantially rectangular cross section. Incidentally, it is specified that the term "rectangular" also includes a substantially square cross section.

In accordance with a third embodiment (not illustrated), said substantially rectangular cross section has at least one lobe.

In accordance with a fourth embodiment (not illustrated), the passage conduit 3 has a substantially elliptical cross section.

In accordance with possible embodiment variants, the elastic element is preferably made of nitrile rubber, or of fluoroelastomer or chloroprene (neoprene ®).

In the preferred embodiment, the tubular body 2 is made of a transparent material, preferably polymethylacrylate (Plexiglas ®), to facilitate the assembly of the valve and in particular the insertion of the tubular sleeve. Moreover, the presence of a transparent tubular body allows operators to check for any accumulation of impurities and dirt inside the passage conduit 3.

The supports 7, 8 for tubular sleeve 6 and the lateral flanges 9, 10 are preferably made of stainless steel or PVC.

The operation of the valve, when it acts as a pressure regulating valve, is described below.

The valve 1 is inserted upstream (according to a direction of flow of the fluid inside the system) of the load whose pressure is to be regulated.

Through the channels 11, 12 obtained respectively on the first portion 7a, 8a of each support 7, 8 and on each lateral flange 9, 10, a driving fluid, preferably compressed air, is delivered into the tubular sleeve 6 to obtain an inflation in proportion to the driving pressure, i.e. to the pressure created inside the sleeve itself.

Incidentally, we again state that only one pair of channels 11, 12 of one side of the valve 1 is operative, whilst the other channels are closed to prevent compressed air from leaking out of the tubular sleeve 6.

Preferably, the value of the driving pressure is controlled by means of proportional pressure regulators, commanded by an electronic system by means of a voltage signal of between 0 and 10 V or by means of a current signal of between 4 and 20 milliAmpere.

Said pressure regulators, being known, are not described or illustrated.

When a predetermined value of the driving pressure and of the external pressure present in the conduit is reached, the sleeve is deformed, reaching a determined value of volume.

In particular, the outer diameter of the cross section of the tubular sleeve 6 can expand or contract in such a way as to reduce or increase the flow of fluid that traverses the passage conduit 3 inside the tubular body 2, in order to induce predetermined head losses in the fluid downstream of the valve 1. The operation of a valve according to the invention is based on the head losses induced in the flow of fluid from the variable throttle of the passage section of the conduit due to the expansion/contraction of the tubular sleeve.

When the driving pressure reaches a determined value, called closing pressure, the tubular sleeve 6 comes in contact with the walls of the tubular body 2 and completely closes the cross section of the fluid passage conduit.

In particular, since the cross section of fluid passage conduit 3 is provided with lobes 13, 14, the tubular sleeve 6, before completely obstructing the cross section of the fluid passage conduit 3, bears on the walls of said conduit, leaving open two small openings at said lobes. In this way, a "fine" regulation of the pressure downstream of the valve can be performed, since small variations in volume of the tubular sleeve 6 cause small variations of the fluid passage section, the cross sections of said openings being very small. Consequently, the pressure variations downstream of the valve will also be very small.

On the contrary, in the absence of the lobes, small variations in the volume of the sleeve would cause great variations in the cross section of the passage conduit 3 and hence highly variable head losses.

The same "fine" regulation is obtained with a passage conduit 3 having rectangular or elliptic cross section. In the first case, since the cross section of the tubular sleeve 6 is circular, the sleeve bears on the walls of the conduit leaving four openings at the corners of the rectangle. In the second case, the openings are determined by the elongation of the ellipse relative to a circular section.

With reference to a passage conduit having rectangular cross section, the performance in terms of "fine" regulation can be further improved using one or more lobes.

If the valve 1 is used in labelling machines to regulate the vacuum present in the intake conduits of the aspirating rollers, the increase in the volume of the tubular sleeve is the result of the external vacuum ("spontaneous" increase" and of the driving pressure present inside the sleeve ("forced" increase).

In the preferred embodiment, the value of the pressure of the fluid flow is measured continuously by means of a pressure transducer (e.g. a capacitive ceramic pressure transducer), which generates a signal which, appropriately interpreted by the control system, drives the proportional pressure regulator connected to the channel 11 of the valve 1.

The operation of the valve, when it acts as a flow rate regulating valve, is substantially similar to the operation of the valve when it acts as a pressure regulating valve.

The only important difference is that, if the valve regulates flow rate, the quantity to be controlled downstream of the valve is a flow rate and not a pressure.

Therefore, the flow rate value will be set, whilst the value of the pressure downstream of the valve (and hence the head loss introduced by the valve) will be determined by the system in which the valve is inserted.

The invention achieves important advantages.

First of all, a valve in accordance with the invention is insensitive to dirt, since, when the sleeve is not inflated, the cross section of the fluid passage conduit 3 is sufficiently large and therefore it allows the fluid to flow easily.

Secondly, a valve according to the invention does not have any seizing problem, typical of valves with mechanical shutter.

Advantageously, the elastic sleeve is obtained by moulding and it has a very low cost of production.

An additional advantage of the present invention is given by the ease of assembly. In particular, the elastic sleeve is easy to insert into the tubular body, the latter being made of transparent material.

Advantageously, a valve according to the invention does not have mechanical parts in relative motion with respect to each other, either by rotation or translation, and consequently it needs not rotating or dynamic seals for isolation from the outside environment.

Another advantage of the present invention is that the materials used to manufacturer the elastic sleeve and the tubular body provide the valve with high resistance to chemical attacks, in particular to corrosion.

Advantageously, a valve according to the present invention can be used both with liquid and gaseous fluids.

## Claims

1. Valve (1) for fluids, comprising;
a tubular body (2) having at least one inlet (4) and at least one outlet (5) and
defining a conduit (3) for the passage of a fluid;
at least one hollow elastic element (6) housed in the tubular body (2) inside said passage conduit (3), said hollow elastic element (6) having at least one opening (6a) to allow the entry of a driving fluid able to set a determined pressure, so-called driving pressure, inside the elastic element (6), in order to change its volume between a minimum value and a maximum value corresponding respectively to an operative condition of minimum obstruction of a fluid passage section within said conduit (3) and an operative condition of maximum obstruction of said passage section, **characterised in that** said conduit (3) for the passage of a fluid has a circular cross section having at least one lobe.

2. Valve (1) for fluids, comprising a tubular body (2) having at least one inlet (4) and at least one outlet (5) and defining a conduit (3) for the passage of a fluid;
at least one hollow elastic element (6) housed in the tubular body (2) inside said passage conduit (3), said hollow elastic element (6) having at least one opening (6a) to allow the entry of a driving fluid able to set a determined pressure, so-called driving pressure, inside the elastic element (6), in order to change its volume between a minimum value and a maximum value corresponding respectively to an operative condition of minimum obstruction of a fluid passage section within said conduit (3) and an operative condition of maximum obstruction of said passage section, **characterised in that** said conduit (3) for the passage of a fluid has a substantially rectangular cross section.

3. Valve (1) for fluids, comprising a tubular body (2) having at least one inlet (4) and at least one outlet (5) and defining a conduit (3) for the passage of a fluid;
at least one hollow elastic element (6) housed in the tubular body (2) inside said passage conduit (3), said hollow elastic element (6) having at least one opening (6a) to allow the entry of a driving fluid able to set a determined pressure, so-called driving pressure, inside the elastic element (6), in order to change its volume between a minimum value and a maximum value corresponding respectively to an operative condition of minimum obstruction of a fluid passage section within said conduit (3) and an operative condition of maximum obstruction of said passage section, **characterised in that** said conduit (3) for the passage of a fluid has a substantially elliptical cross section.

4. Valve as claimed in any of the previous claims, **characterised in that** said hollow elastic element (6) is a tubular sleeve having at least one end opening (6a) for the entry of said driving fluid.

5. Valve as claimed in claim 4, **characterised in that** said tubular sleeve is positioned coaxially to said conduit (3) for the passage of a fluid.

6. Valve as claimed in either of the claims 4 or 5, **characterised in that** it comprises at least one support (7,8) to maintain the tubular sleeve (6) in position inside said passage conduit (3), said support (7,8) having a first portion (7a,8a) able to be inserted in said end opening (6a) of the sleeve and a second portion (7b,8b) able to be connected to said tubular body (2).

7. Valve as claimed in claim 6, **characterised in that** said second portion (7b,8b) of the support (7,8) has substantially ogival shape.

8. Valve as claimed in either of the claims 6 or 7, **characterised in that** said first portion (7a,8a) of the support (7,8) obstructs, providing a seal, said end opening (6a) of the sleeve.

9. Valve as claimed in any of the claims 6 through 8, **characterised in that** said first portion (7a,8a) of the support (7,8) has at least one channel (11) to allow the introduction of a driving fluid into the elastic element (6).

10. Valve as claimed in claim 1, **characterised in that** said conduit for the passage of a fluid has a circular cross section having a pair of mutually opposite lobes (13,14) along a diameter (D) of said cross section.

11. Valve as claimed in claim 2, **characterised in that** said rectangular cross section has at least one lobe.

12. Valve as claimed in any of the previous claims, **characterised in that** said elastic element (6) is made of nitrile rubber.

13. Valve as claimed in any of the previous claims 1 through 11, **characterised in that** said elastic element (6) is made of fluoroelastomer.

14. Valve as claimed in any of the previous claims 1 through 11, **characterised in that** said elastic element (6) is made of chloroprene.

15. Valve as claimed in any of the previous claims, **characterised in that** said tubular body (2) is made of transparent material.

16. Valve as claimed in claim 15, **characterised in that** said tubular body (2) is made of polycarbonate.

17. Valve as claimed in claim 15, **characterised in that** said tubular body (2) is made of polymethylacrylate.

18. Use of a valve (1) as claimed in any of the previous claims to regulate the pressure of an operative fluid co-operating with an aspirating roller of a labelling machine.

19. Labelling machine comprising at least one aspirating roller for treating the labels, **characterised in that** it comprises at least one valve (1) as claimed in any of the previous claims 1 through 17 to regulate the pressure of an operative fluid co-operating with said roller

20. Use of a valve (1) as claimed in any of the previous claims 1 through 17 to regulate the flow rate of an operative fluid co-operating with an aspirating roller of a labelling machine.

21. Labelling machine comprising at least one aspirating roller for treating the labels, **characterised in that** it comprises at least one valve (1) as claimed in any of the previous claims 1 through 17 to regulate the flow rate of an operative fluid co-operating with said roller.

## Patentansprüche

1. Ventil (1) für Fluide, umfassend:
einen rohrförmigen Körper (2), der mindestens einen Einlass (4) und mindestens einen Auslass (5) enthält und eine Leitung (3) für den Durchfluss eines Fluids bildet;
mindestens ein hohles, elastisches Element (6), das im rohrförmigen Körper (2) in genannter Durchflussleitung (3) untergebracht ist, wobei genanntes hohles, elastisches Element (6) mindestens eine Öffnung (6a) aufweist, um das Einlaufen eines Prozessfluids zu ermöglichen, das einen bestimmten Druck, den so genannten Prozessdruck, im elastischen Element (6) bewirken kann, um dessen Volumen zwischen einem Mindestwert und einem Höchstwert zu ändern, wobei diese Werte jeweils einem Betriebsstatus der Mindestabsperrung eines Fluiddurchflussabschnitts in genannter Leitung (3) bzw. einem Betriebsstatus der maximalen Absperrung genannten Durchflussabschnitts entsprechen, **dadurch gekennzeichnet, dass** genannte Leitung (3) für den Durchfluss eines Fluids einen runden Querschnitt mit mindestens einer Ausbuchtung aufweist.

2. Ventil (1) für Fluide, umfassend einen rohrförmigen Körper (2), der mindestens einen Einlass (4) und mindestens einen Auslass (5) enthält und eine Leitung (3) für den Durchfluss eines Fluids bildet;
mindestens ein hohles, elastisches Element (6), das im rohrförmigen Körper (2) in genannter Durchflussleitung (3) untergebracht ist, wobei genanntes hohles, elastisches Element (6) mindestens eine Öffnung (6a) aufweist, um das Einlaufen eines Prozessfluids zu ermöglichen, das einen bestimmten Druck, den so genannten Prozessdruck, im elastischen Element (6) bewirken kann, um dessen Volumen zwischen einem Mindestwert und einem Höchstwert zu ändern, wobei diese Werte jeweils einem Betriebsstatus der Mindestabsperrung eines Fluiddurchflussabschnitts in genannter Leitung (3) bzw. einem Betriebsstatus der maximalen Absperrung genannten Durchflussabschnitts entsprechen, **dadurch gekennzeichnet, dass** genannte Leitung (3) für den Durchfluss eines Fluids einen im Wesentlichen rechteckigen Querschnitt aufweist.

3. Ventil (1) für Fluide, umfassend einen rohrförmigen Körper (2), der mindestens einen Einlass (4) und mindestens einen Auslass (5) enthält und eine Leitung (3) für den Durchfluss eines Fluids bildet;
mindestens ein hohles, elastisches Element (6), das im rohrförmigen Körper (2) in genannter Durchflussleitung (3) untergebracht ist, wobei genanntes hohles, elastisches Element (6) mindestens eine Öffnung (6a) aufweist, um das Einlaufen eines Prozessfluids zu ermöglichen, das einen bestimmten Druck, den so genannten Prozessdruck, im elastischen Element (6) bewirken kann, um dessen Volumen zwischen einem Mindestwert und einem Höchstwert zu ändern, wobei diese Werte jeweils einem Betriebsstatus der Mindestabsperrung eines Fluiddurchflussabschnitts in genannter Leitung (3) bzw. einem Betriebsstatus der maximalen Absperrung genannten Durchflussabschnitts entsprechen, **dadurch gekennzeichnet, dass** genannte Leitung (3) für den Durchfluss eines Fluids einen im Wesentlichen elliptischen Querschnitt aufweist.

4. Ventil nach irgendeinem der vorherigen Ansprüche, **dadurch gekennzeichnet, dass** genanntes hohles, elastisches Element (6) eine rohrförmige Hülse ist, die mindestens eine Endöffnung (6a) für den Einlass genannten Prozessfluids aufweist.

5. Ventil nach Anspruch 4, **dadurch gekennzeichnet, dass** genannte rohrförmige Hülse koaxial zu genannter Leitung (3) für den Durchfluss eines Fluids positioniert ist.

6. Ventil nach Anspruch 4 oder 5, **dadurch gekennzeichnet, dass** es mindestens eine Halterung (7, 8) umfasst, um die Position der rohrförmigen Hülse (6) in genannter Durchflussleitung (3) beizubehalten, wobei genannte Halterung (7, 8) einen ersten Teil (7a, 8a) aufweist, der in genannte Endöffnung (6a) der Hülse eingesetzt werden kann, und einen zweiten Teil (7b, 8b), die an genannten rohrförmigen Körper (2) angeschlossen werden kann.

7. Ventil nach Anspruch 6, **dadurch gekennzeichnet, dass** genannter zweiter Teil (7b, 8b) der Halterung (7, 8) eine im Wesentlichen ovale Form hat.

8. Ventil nach Anspruch 6 oder 7, **dadurch gekennzeichnet, dass** genannter erster Teil (7a, 8a) der Halterung (7, 8) genannte Endöffnung (6a) der Hülse absperrt und ein Siegel bildet.

9. Ventil nach irgendeinem der Ansprüche von 6 bis 8, **dadurch gekennzeichnet, dass** genannter erster Teil (7a, 8a) der Halterung (7, 8) mindestens einen Kanal (11) aufweist, um das Einfüllen eines Prozessfluids in das elastische Element (6) zu ermöglichen.

10. Ventil nach Anspruch 1, **dadurch gekennzeichnet, dass** genannte Leitung für den Durchfluss eines Fluids einen runden Querschnitt mit zwei gegenständig angeordneten Ausbuchtungen (13, 14) an einem Durchmesser (D) genannten Querschnitts aufweist.

11. Ventil nach Anspruch 2, **dadurch gekennzeichnet, dass** der rechteckige Querschnitt mindestens eine Ausbuchtung aufweist.

12. Ventil nach irgendeinem der vorherigen Ansprüche, **dadurch gekennzeichnet, dass** genanntes elastisches Element (6) aus Nitrilgummi besteht.

13. Ventil nach irgendeinem der vorherigen Ansprüche von 1 bis 11, **dadurch gekennzeichnet, dass** genanntes elastisches Element (6) aus Fluorelastomer besteht.

14. Ventil nach irgendeinem der vorherigen Ansprüche von 1 bis 11, **dadurch gekennzeichnet, dass** genanntes elastisches Element (6) aus Chlorophen besteht.

15. Ventil nach irgendeinem der vorherigen Ansprüche, **dadurch gekennzeichnet, dass** der rohrförmige Körper (2) aus durchsichtigem Material besteht.

16. Ventil nach Anspruch 15, **dadurch gekennzeichnet, dass** genannter rohrförmige Körper (2) aus Polycarbonat besteht.

17. Ventil nach Anspruch 15, **dadurch gekennzeichnet, dass** genannter rohrförmige Körper (2) aus Polymethylacrylat besteht.

18. Verwendung eines Ventils (1) nach irgendeinem der vorherigen Ansprüche zur Regulierung des Drucks eines Prozessfluids, das mit einer Saugwalze eines Etikettierers zusammenarbeitet.

19. Etikettierer, umfassend mindestens eine Saugwalze für die Bearbeitung der Etiketten, **dadurch gekennzeichnet, dass** er mindestens ein Ventil (1) nach irgendeinem der vorherigen Ansprüche von 1 bis 17 zur Druckregelung eines Prozessfluids umfasst, das mit genannter Walze zusammenarbeitet.

20. Verwendung eines Ventils (1) nach irgendeinem der vorherigen Ansprüche von 1 bis 17 zur Durchflussregelung eines Prozessfluids, das mit einer Saugwalze eines Etikettierers zusammenarbeitet.

21. Etikettierer, umfassend mindestens eine Saugwalze für die Bearbeitung der Etiketten, **dadurch gekennzeichnet, dass** er mindestens ein Ventil (1) nach irgendeinem der vorherigen Ansprüche von 1 bis 17 zur Durchflussregelung eines Prozessfluids umfasst, das mit genannter Walze zusammenarbeitet.

## Revendications

1. Robinet (1) pour liquides comprenant :
un corps tubulaire (2) avec au moins un orifice d'admission (4) et au moins un orifice d'émission (5) et formant un conduit (3) pour le passage d'un liquide, au moins un élément élastique creux (6) logé dans le corps tubulaire (2) dans ledit conduit de passage (3), ledit élément élastique creux (6) comprenant au moins une ouverture (6a) pour permettre l'admission d'un liquide de commande en mesure d'instaurer une pression déterminée, appelée pression de commande, à l'intérieur de l'élément élastique (6), afin de varier son volume d'une valeur minimum à une valeur maximum, équivalant respectivement à une condition de travail d'obstruction minimum d'une section de passage d'un liquide dans ledit conduit (3) et à une condition de travail d'obstruction maximum de ladite section de passage, **caractérisé en ce que** ledit conduit (3) pour le passage d'un liquide a une section transversale circulaire présentant au moins un lobe.

2. Robinet (1) pour liquides, comprenant un corps tubulaire (2) avec au moins un orifice d'admission (4) et au moins un orifice d'émission (5) et formant un conduit (3) pour le passage d'un liquide ;
au moins un élément élastique creux (6) logé dans le corps tubulaire (2) dans ledit conduit de passage (3), ledit élément élastique creux (6) comprenant au moins une ouverture (6a) pour permettre l'admission d'un liquide de commande en mesure d'instaurer une pression déterminée, appelée pression de commande, à l'intérieur de l'élément élastique (6), afin de varier son volume d'une valeur minimum à une valeur maximum, équivalant respectivement à une condition de travail d'obstruction minimum d'une section de passage d'un liquide dans ledit conduit (3) et à une condition de travail d'obstruction maximum de ladite section de passage, **caractérisé en ce que** ledit conduit (3) pour le passage d'un liquide a une section transversale essentiellement rectangulaire.

3. Robinet (1) pour liquides, comprenant un corps tubulaire (2) avec au moins un orifice d'admission (4) et au moins un orifice d'émission (5) et formant un conduit (3) pour le passage d'un liquide ;
au moins un élément élastique creux (6) logé dans le corps tubulaire (2) dans ledit conduit de passage (3), ledit élément élastique creux (6) comprenant au moins une ouverture (6a) pour permettre l'admission d'un liquide de commande en mesure d'instaurer une pression déterminée, appelée pression de commande, à l'intérieur de l'élément élastique (6), afin de varier son volume d'une valeur minimum à une valeur maximum, équivalant respectivement à une condition de travail d'obstruction minimum d'une section de passage d'un liquide dans ledit conduit (3) et à une condition de travail d'obstruction maximum de ladite section de passage, **caractérisé en ce que** ledit conduit (3) pour le passage d'un liquide a une section transversale essentiellement elliptique.

4. Robinet selon l'une quelconque des revendications précédentes, **caractérisé en ce que** ledit élément élastique creux (6) est une gaine tubulaire comprenant au moins une ouverture d'extrémité (6a) pour l'admission dudit liquide de commande.

5. Robinet selon la revendication 4, **caractérisé en ce que** ladite gaine tubulaire est positionnée coaxialement audit conduit (3) pour le passage d'un liquide.

6. Robinet selon l'une quelconque des revendications 4 ou 5, **caractérisé en ce qu'**il comprend au moins un support (7, 8) pour garder la gaine tubulaire (6) en place à l'intérieur dudit conduit de passage (3), ledit support (7, 8) présentant une première partie (7a, 8a) pouvant être insérée dans ladite ouverture d'extrémité (6a) de la gaine et une deuxième partie (7b, 8b) pouvant être raccordée audit corps tubulaire (2).

7. Robinet selon la revendication 6, **caractérisé en ce que** ladite deuxième partie (7b, 8b) du support (7, 8) a une forme essentiellement ogivale.

8. Robinet selon l'une des revendications 6 ou 7, **caractérisé en ce que** ladite première partie (7a, 8a) du support (7, 8) bouche, par un joint étanche, ladite ouverture d'extrémité (6a) de la gaine.

9. Robinet selon l'une quelconque des revendications 6 à 8, **caractérisé en ce que** ladite première partie (7a, 8a) du support (7, 8) présente au moins un canal (11) pour permettre l'admission d'un liquide de commande dans l'élément élastique (6).

10. Robinet selon la revendication 1, **caractérisé en ce que** ledit conduit pour le passage d'un liquide a une section transversale circulaire, munie de deux lobes situés en face l'un de l'autre (13, 14) sur un diamètre (D) de ladite section transversale.

11. Robinet selon la revendication 2, **caractérisé en ce que** ladite section transversale rectangulaire comprend au moins un lobe.

12. Robinet selon l'une quelconque des revendications précédentes, **caractérisé en ce que** ledit élément élastique (6) est en caoutchouc nitrile.

13. Robinet selon l'une quelconque des revendications 1 à 11, **caractérisé en ce que** ledit élément élastique (6) est en fluoroélastomère.

14. Robinet selon l'une quelconque des revendications 1 à 11, **caractérisé en ce que** ledit élément élastique (6) est en chloroprène.

15. Robinet selon l'une quelconque des revendications précédentes, **caractérisé en ce que** ledit corps tubulaire (2) est en matière transparente.

16. Robinet selon la revendication 15, **caractérisé en ce que** ledit corps tubulaire (2) est en polycarbonate.

17. Robinet selon la revendication 15, **caractérisé en ce que** ledit corps tubulaire (2) est en polyméthylacrylate.

18. Utilisation d'un robinet (1) selon l'une quelconque des revendications précédentes pour régler la pression d'un liquide de service coopérant avec un cylindre aspirant d'une étiqueteuse.

19. Étiqueteuse comprenant au moins un cylindre aspirant pour le traitement des étiquettes, **caractérisée en ce qu'**elle présente au moins un robinet (1) selon l'une quelconque des revendications 1 à 17 pour régler la pression d'un liquide de service coopérant avec ledit cylindre.

20. Utilisation d'un robinet (1) selon l'une quelconque des revendications précédentes 1 à 17 pour régler le débit d'un liquide de service coopérant avec un cylindre aspirant d'une étiqueteuse.

21. Étiqueteuse comprenant au moins un cylindre aspirant pour le traitement des étiquettes, **caractérisée en ce qu'**elle présente au moins un robinet (1) selon l'une quelconque des revendications 1 à 17 pour régler le débit d'un liquide de service coopérant avec ledit cylindre.
